# EUROPEAN PATENT APPLICATION

(11) **EP 3 163 454 A1**
(43) Date of publication of application: **03.05.2017**
(21) Application number: 15811091.6
(22) Date of filing: 17.06.2015
(51) Int. Cl.: G06F 13/00, H04L 12/58

(54) **COMMUNICATION DEVICE AND EMAIL SERVER**

(30) Priority: 24.06.2014 JP 2014129412
(71) Applicant: Kyocera Document Solutions Inc., Osaka-shi, Osaka 540-8585 (JP)
(72) Inventor: SAKAGUCHI, Shoichi, Osaka-shi Osaka 540-8585 (JP); TAKEDA, Hideki, Osaka-shi Osaka 540-8585 (JP); TANAKA, Yoshihisa, Osaka-shi Osaka 540-8585 (JP); HIROBE, Yumi, Osaka-shi Osaka 540-8585 (JP)
(74) Representative: Treeby, Philip David William
(86) International application number: PCT/JP2015/067383
(87) International publication number: WO 2015/198925

(57) **Abstract**

In sending mail data that is addressed to a plurality of BCC destinations, the contents of an additional mail message body can be change individually for the BCC destinations. A communication device includes an accepting module (52), a mail generation module, a transmission module (11,54). The accepting module (52) accepts a mail message body and a plurality of BCC destinations and also accepts the setting of group attributes indicating groups to which the BCC destinations belong and additional contents that are added to the main message body individually for the group attributes. The mail generation module generates mail data (M2,M3) including the additional contents corresponding to the groups to which the BCC destinations belong and the mail message body and addressed to the BCC destinations for which the accepting module (52) accepts the group attributes. The transmission module (11,54) sends the mail data generated by the mail data generation module (53) to a mail server.

## Description

### Technical Field

The present invention relates to a communication device that sends mail data to a mail server and a mail server, and more particularly to a technique of sending mail data whose destination includes a plurality of BCC (Blind Carbon Copy) destinations.

### Background Art

In a communication device such as a mail client that generates mail data that is sent to a mail server, a mail sender can input a plurality of sending destinations (mail addresses). The sending destinations include a plurality of types of addresses such as a TO address, a CC (Carbon Copy) address and a BCC address.

Patent Literature 1 discloses a mail client in which a mail message body input field exclusive for a BCC destination or address is provided in addition to a normal mail message body input field. In this mail client, mail data is sent to the BCC address which includes a mail message body inputted into the mail message body input field exclusive for the BCC address in addition to a mail message body that is inputted into the normal mail message body input field. This enables the mail message body that is added to the mail message body that is to be sent to the TO address can be sent to the BCC address.

### Prior Art Literature

### Patent Literature

Patent Literature 1: JP-A-2006-268489

### Summary of the Invention

### Problem that the Invention is to Solve

In the technique, however, in the case of mail data being sent which has a plurality of BCC destinations or addresses, only a mail message body can be added which can commonly be shared by the plurality of BCC addresses. In the case of there being different mail message bodies that a sender wants to add for the individual different BCC addresses, in case the technique allows the sender to add only a mail message body that can commonly be shared by the BCC addresses, it can be said that the technique lacks the user's conveniences.

The invention has been made in view of these situations, and an object thereof is to provide a configuration in which in sending mail data having a plurality of BCC addresses as sending destinations thereof, the contents of a mail message body to be added can be changed for each of the BCC addresses.

### Means for Solving the Problem

According to an aspect of the invention, there is provided a communication device including an accepting module that accepts a mail message body and a plurality of BCC destinations and which accepts the setting of group attributes indicating groups to which the BCC destinations belong and additional contents that are added to the mail message body individually for the group attributes, a mail data generation module that generates mail data that includes the mail message body and which are addressed to a BCC destination for which the accepting module does not accept the setting of a group attribute and mail data that includes the additional contents corresponding to the groups to which the BCC destinations belong and the mail message main body and which are addressed to the BCC destinations for which the accepting module accepts the setting of group attributes, and a transmission module that sends the mail data that the mail data generation module generates.

According to another aspect of the invention, there is provided a mail server including a sending mail generation module that generates a sending mail addressed to a BCC destination for which an accepting module of a communication device does not accept the setting of a group attribute and including a mail message body and a sending mail addressed to a BCC destination for which the accepting module accepts the setting of a group attribute and including an additional content corresponding to a group that the BCC destination that the accepting module accepts belongs and the mail message body by following commands included in mail data sent thereto from the communication device, and a transmission module that sends the sending mails that the sending mail generation module generates.

### Advantage of the Invention

According to the invention, in sending mail data having a plurality of BCC addresses as sending destinations thereof, the contents of a mail message body to be added can be changed for each of the BCC addresses.

### Brief Description of Drawings

Fig. 1 is a conceptual diagram of a mail transmission and reception system according to an embodiment of the invention.
Fig. 2 is a block diagram showing the configuration of a mail client according to the embodiment of the invention.
Fig. 3 is a diagram showing an example of a mail data generation screen that is displayed on a display unit of the mail client according to the embodiment of the invention.
Fig. 4 is a diagram showing an example of mail data that is generated by a mail data generation module of the mail client according to the embodiment of the invention.
Fig. 5 is a diagram showing an example of a mail data display screen that is displayed on the display unit of the mail client according to the embodiment of the invention.
Fig. 6 is a diagram showing an example of a setting screen that is displayed on the display unit of the mail client according to the embodiment of the invention.
Fig. 7 is a diagram showing an example of a mail data generation screen that is displayed on the display unit of the mail client according to the embodiment of the invention.
Fig. 8 is a diagram showing an example of mail data that is generated by the mail data generation module of the mail client according to the embodiment of the invention.
Fig. 9 is a diagram showing an example of mail data that is generated by the mail data generation unit of the mail client according to the embodiment of the invention.
Fig. 10 is a diagram showing an example of mail data that is generated by the mail data generation module of the mail client according to the embodiment of the invention.
Fig. 11 is a diagram showing an example of the contents of the mail data display screen that is displayed on the display unit of the mail client according to the embodiment invention which receives the mail data shown in Fig. 8.
Fig. 12 is a diagram showing an example of the contents of the mail data display screen that is displayed on the display unit of the mail client according to the embodiment invention which receives the mail data shown in Fig. 9.
Fig. 13 is a flowchart showing a flow of mail data sending operations carried out by the mail client and a mail server according to the embodiment of the invention.
Fig. 14 is a diagram showing an example of mail data that is generated in a mail data generation module of a mail client according a modified example.
Fig. 15 is a flowchart showing a flow of mail data sending operations carried out by the mail client and a mail server according to the modified example.

### Mode for Carrying out the Invention

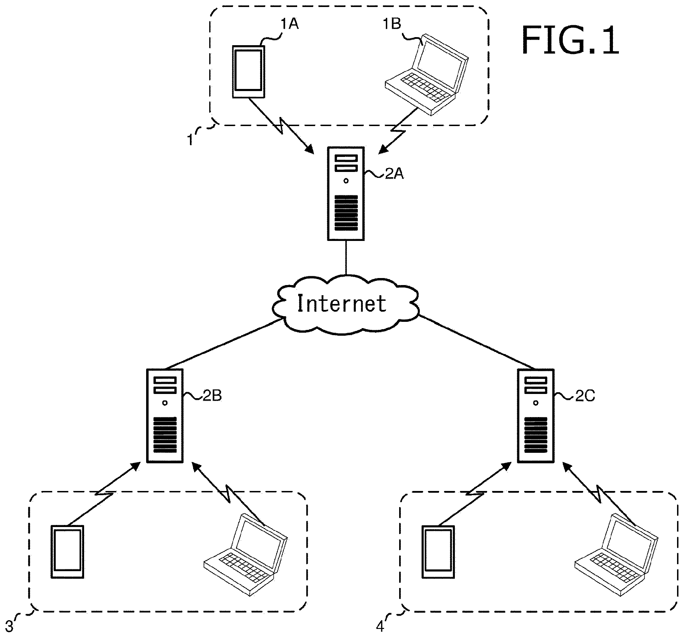

Hereinafter, referring to the drawings, a communication device, a communication control program and a mail server according to an embodiment of the invention will be described. Fig. 1 is a conceptual diagram of a mail transmission and reception system according to an embodiment of the invention. The mail transmission and reception system is made up of mail clients (communication devices) and mail servers that are connected to each other via the Internet.

A mail client 1A and a mail client 1B (hereinafter, referred to as a "mail client 1" as a whole from time to time) are a mobile communication terminal such as a smart phone or a PC (Personal Computer). The mail client 1 connects to the Internet via a communication network of a mobile phone company or a public LAN (Local Area Network) to thereby be able to communicate with a mail server 2A to send or receive data. The mail client 1 generates mail data that corresponds to a user operation by a mail generator and sends the mail data generated to the mail server 2A by the use of a SMTP (Simple Mail Transfer Protocol).

The mail server 2A delivers mail data to a mail server 2B or a mail server 2C based on the mail data sent thereto from the mail client 1.

A mail client 3 or a mail client 4 communicates with the mail server 2B or the mail server 2C and downloads the mail data when the mail data is delivered to the mail server 2B or the mail server 2C.

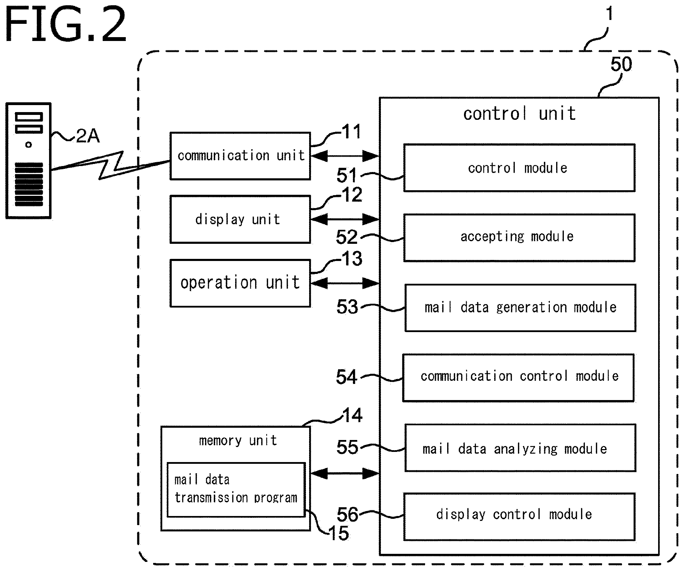

Fig. 2 is a block diagram showing the configuration of the mail client 1. The mail client 1 includes a communication unit 11, a display unit 12, an operation unit 13 and a memory unit 14.

The communication unit 11 includes a communication module such as a LAN chip and sends mail data to or receives mail data from the mail server 2A under control of a communication control module 54, which will be described later.

The display unit 12 includes a liquid crystal display (LCD: Liquid Crystal Display)) or an organic EL (OLED: Organic Light-Emitting Diode) display. The display unit 12 displays a main data generation screen under control of a display control module 56.

The operation unit 13 includes an input device such as a keyboard and a pointing device such as a mouse. The operation unit 13 accepts a user operation regarding a screen that is displayed on the display unit 12 from the mail generator.

The memory unit 14 is a storage device with a large storage capacity such as an HDD (Hard Disk Drive).

The mail client 1 includes further a control unit 50. The control unit 50 is made up of a CPU (Central Processing Unit), a RAM (Random Access Memory) and a ROM (Read Only Memory). The control unit 50 functions as a control module 51, an accepting module 52, a mail data generation module 53, the communication control module 54, a mail data analyzing module 55 and the display control module 56 as a result of a mail data transmission program 15 (a communication control program) stored in the ROM or the memory unit 14 being executed by the CPU. The control module 51, the accepting module 52, the mail data generation module 53, the communication control module 54, the mail data analyzing module 55 and the display control module 56 of the control unit 50 do not have to operate based on the mail data transmission program 15 described above but may be configured by individual hardware circuitries.

The control module 51 governs the control of an overall operation of the mail client 1. The control module 51 connects to the communication unit 11, the display unit 12, the operation unit 13 and the memory unit 14 so as not only to control the operations of those constituent units of the mail client 1 but also to send or receive data to or from the constituent units.

The accepting module 52 accepts commands such as a command to input a mail message body, a command to input a mail address as a sending destination, a command to select an attached file and a command to select a type of a sending destination based on user operations performed through the operation unit 13 by a mail generator. In particular, when the accepting module 52 accepts a sending destination that includes a plurality of BCC destinations, the accepting module 52 accepts the setting of group attributes that indicate groups to which the BCC destinations belong.

The mail data generation module 53 has a function to generate mail data based on the command that the accepting module 52 has accepted. The details of the contents of the mail data that the mail data generation module generates will be described later.

The communication control module 54 has a function to control the transmission and reception of data by the communication unit. Specifically speaking, the communication control module 54 instructs the communication unit 11 to send the mail data generated by the mail data generation module 53 to the mail server 2A. The communication control module 54 communicates with the mail server 2A via the communication unit 11 at a timing at which the accepting module 52 accepts a mail reception confirmation command that the accepting module 52 or a timing at which a specified amount of time elapses to confirm whether or not mail data has been delivered to the mail server 2A. In the case of the mail data having been delivered to the main server 2A, the communication control module 54 instructs the communication unit 11 to download (receive) the mail data from the mail server 2A.

The mail data analyzing module 55 has a function to analyze header information that is contained in the mail data that the communication control module has received via the communication unit 11.

The display control module 56 has a function to control a display operation by the display unit 12.

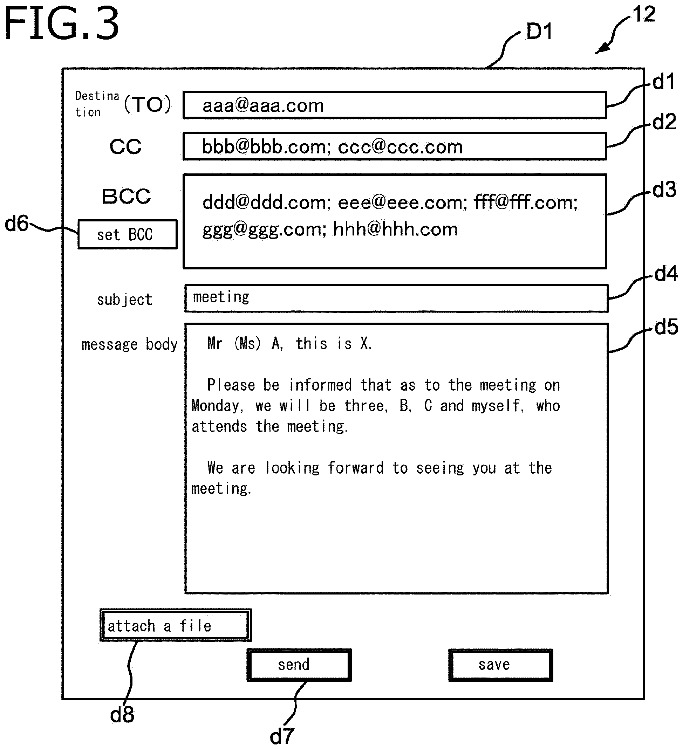

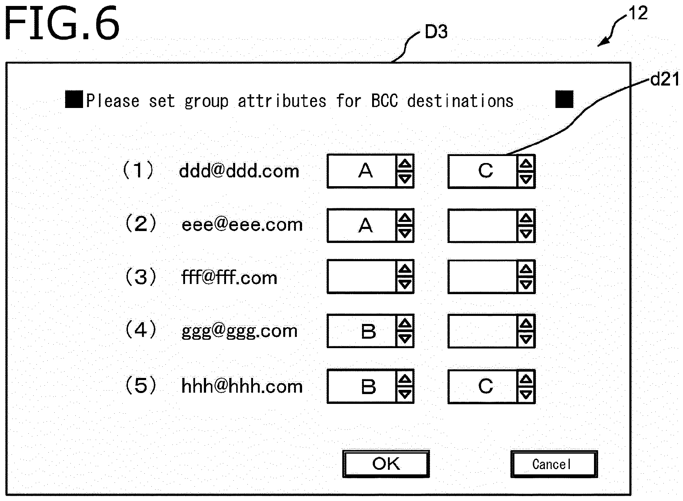

Following this, specific details of a mail data generation process will be described. Fig. 3 is an example of a mail data generation screen D1 that is displayed on the display unit 12. A TO destination input field d1, a CC destination input field d2 that accepts a CC destination input command, a BCC destination input field d3 that accepts a BCC destination input command, a subject input field d4 that accepts a subject input command, and a mail message body input field d5 are provided on the mail data generation screen D1. Additionally, a set BCC button d6, a send button d7 and an attach button d8 are provided on the mail data generation screen D1. When the accepting module 52 accepts the selection of the set BCC button d6, the display control module 56 instructs the display unit 12 to display a setting screen D3 (refer to Fig. 6) thereon to accept the setting of group attributes that indicate groups to which BCC destinations belong which are inputted into the BCC destination input field d6. Additionally, when the accepting module accepts the selection of the attach button d8, the display control module 56 instructs the display unit 12 to display thereon an attached file selection screen to accept the selection of an attached file. In addition, when the accepting module 52 accepts the selection of the send button d7, the mail data generation module 53 generates mail data that corresponds to the information inputted into the input fields described above and a file selected on the attached file selection screen. Thereafter, the communication control module 54 instructs the communication unit 11 to send the mail data that the mail data generation module 53 has generated to the mail server 2A.

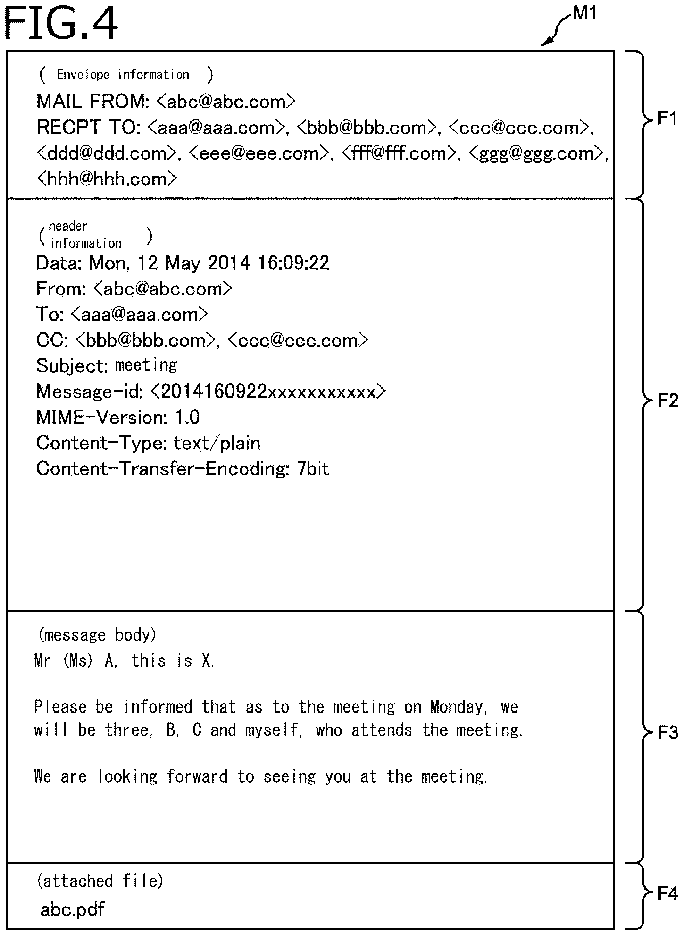

Fig. 4 is a diagram showing an example of mail data that is generated by the mail data generation module 53. Here, the contents of mail data M1 that is generated when the accepting module 52 does not accept the selection of the set BCC button d6 and does not accept the setting of group attributes that indicate groups to which the BCC destinations belong.

The mail data M1 includes envelope information F1, header information F2, mail message body information F3, and attached file information F4. The envelope information F1 includes MAIL FROM information that indicates a source address of the mail data and RECEPT TO information that indicates information on a sending destination of the mail data. The mail data generation module 53 generates envelope information F1 in which a mail address of a mail generator is used as the MAIL FROM information and all mail addresses that are inputted into the TO destination input field d1, the CC destination input field d2 and the BCC destination input field d3 are used as the RECPT TO information. The envelope information F1 generated is used in identifying a mail server to which the mail data is delivered in the mail server 2A.

The header information F2 includes Data information that indicates the date and time at which mail data is sent, From information that indicates the source address of the mail data, To information that indicates a TO destination, CC information that indicates CC destinations, Subject information that indicates a subject, and Message-id information that is an inherent identifier given to each mail data. The mail data generation module 53 generates header information F2 in which a destination inputted into the TO destination input field d1 is used as the To information and information inputted into the subject input field d4 is used as the Subject information. The mail data generation module 53 does not instruct the destinations inputted into the BCC information input field d3 to be included in the header information F2.

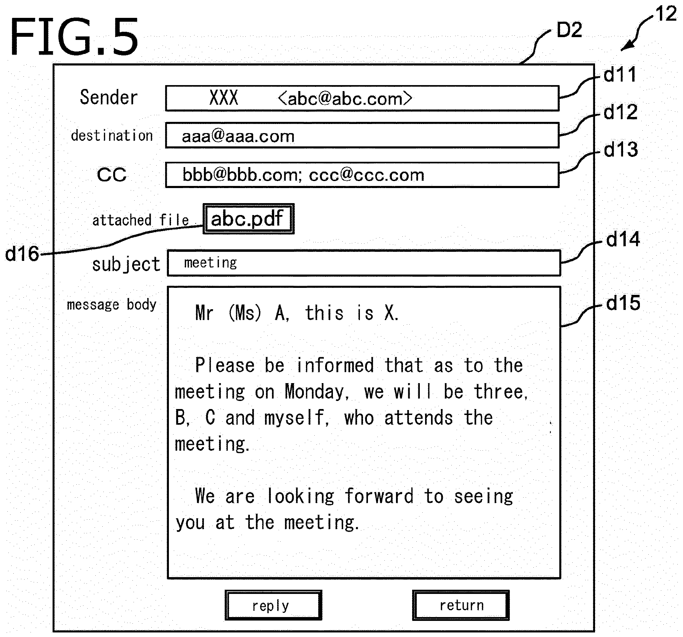

The header information F2 generated is analyzed by the mail data analyzing module 55 of the mail client 1, the mail client 3 or the mail client 4 that has received the mail data M1. The display control module 56 determines the contents of a display screen that is displayed on the display unit 12. Fig. 5 is a diagram showing an example of a mail data display screen D2 that is displayed on the display unit 12. A sender display field d11, a TO destination display field d12; a CC destination display field d13, a subject display field d14 and a mail message body display field d15 are provided on the mail data display screen D2. The display control module 56 instructs the display unit 12 to display the destination shown in the From information of the header information F2 in the sender display field d11, to display the destination shown in the To information in the TO destination display field d12, to display the destination shown in the CC information in the CC destination display field d13, to display the information shown in the Subject information in the subject display field d14 and to display the information shown in the mail message body information F3 in the mail message body display field d15. Additionally, an attach file button d16 is provided on the mail data display screen D2. When the accepting module 52 accepts the selection of the attach file button d16, the display control module 56 instructs the display unit 12 to display thereon a file associated with the attach file button d16.

In this way, in the event that the accepting module 52 does not accept the selection of the set BCC button d6 and does not accept the setting of group attributes that indicate groups to which the BCC destinations belong, no BCC destination is included in the header information F2, and therefore, all the mail recipients cannot know the BCC destinations.

Fig. 6 is a diagram showing an example of a setting screen D3 that is displayed on the display unit 12. When the accepting module 52 accepts the selection of the set BCC button d6, the display control module 56 instructs the display unit 12 to display the setting screen D3 thereon. In the example shown in Fig. 6, for example, a group A and a group C are set for the BCC destination of "ddd@ddd.com", and the group A is set for the BCC destination of "eee@eee.com" On the other hand, no group attribute is set for the BCC destination of "fff@fff.com". For example, when the accepting module 52 accepts the selection of a frame d21, the display control module 56 instructs the display unit 12 to change the display within the frame d21 from the group C to another group. This switches the setting of a group attribute for the BCC destination of "ddd@ddd.com".

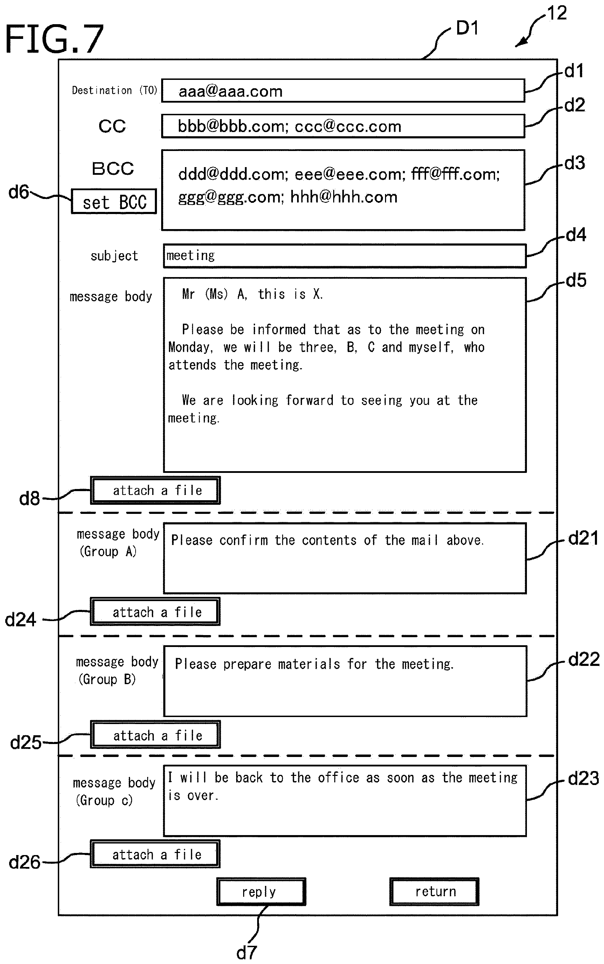

When the setting of the group attributes for the BCC destinations is completed, the display control module 56 instructs the display unit 12 to display thereon a mail data generating screen D1 in which mail message body input fields are provided for the group attributes set. Fig. 7 is a diagram showing an example of a mail data generation screen D1 that is displayed on the display unit 12 after the group attributes have been set. On the mail data generation screen D1, additional mail message body input fields and attach a file buttons are provided individually for the group attributes of the BCC destinations (additional mail message body input fields d21 to d23, attach a file buttons d24 to d26). The mail data generation module 53 generates mail data corresponding to the information inputted into the input fields described above or the files selected on the attached file selection screen.

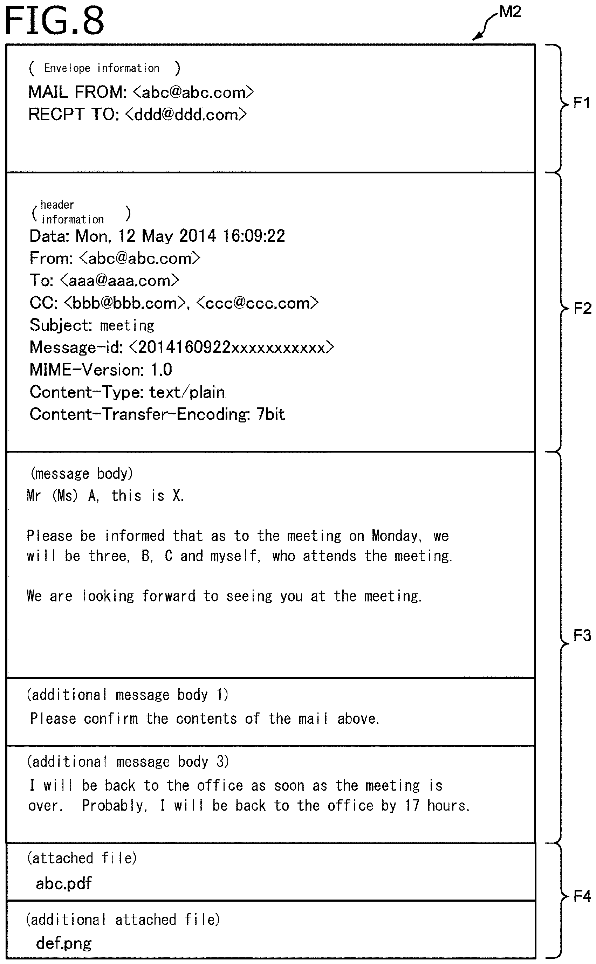

Figs. 8 to 10 are diagrams showing examples of mail data that is generated by the mail data generation module 53.

When the accepting module 52 accepts a command to input an additional mail message body or a command to attach a file for the group attribute of each BCC destination, the mail data generation module 53 needs to generate a plurality of mail data each having different header information F2. Fig. 8 shows the contents of mail data M2 that is sent to the destination of ""ddd@ddd.com" that belongs to the group A and the group C. As shown in Fig. 8, the mail data generation module 53 generates the mail data M2 that includes envelope information F1 in which only the destination of ""ddd@ddd.com" is used as RECPT TO information, mail message body information F3 that includes an additional mail message body 1 and an additional mail message body 3 that are added for the group A and the group C in addition to a common mail message body, and attached file information F4 that includes an additional attached file 1 that is added for the group C in addition to a common additional file.

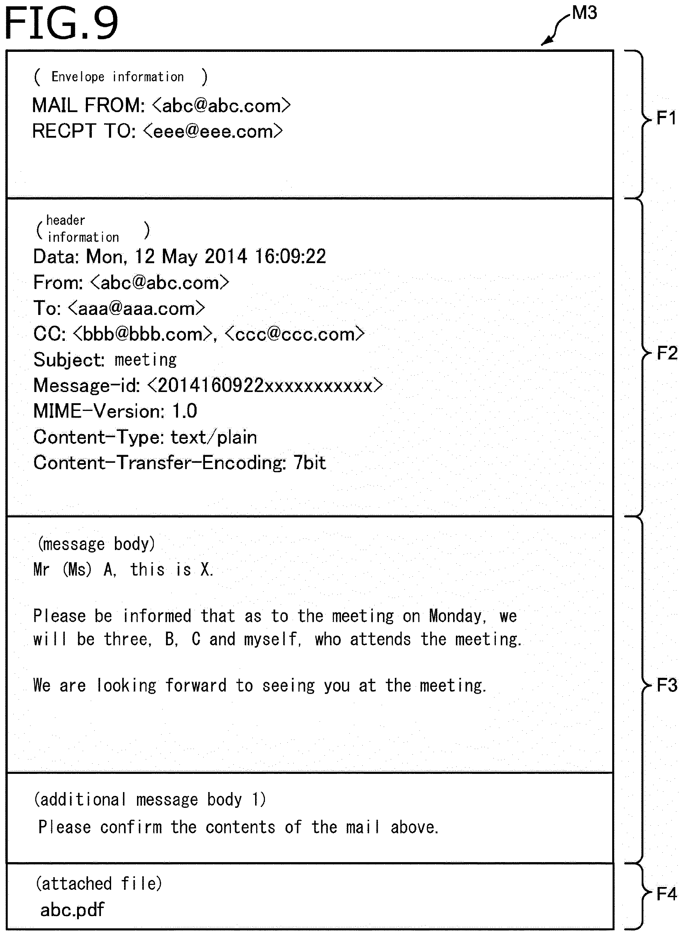

Fig. 9 shows the contents of mail data M3 that is sent to the destination of ""eee@eee.com" that belongs the group A. As shown in Fig. 9, the mail data generation module 53 generates the mail data M3 that includes envelope information F1 in which only the destination of ""eee@eee.com" is used as RECPT TO information, main message body information F3 that includes an additional mail message body 1 that is added for the group A in addition to a common mail message body, and attached file information F4 that includes a common attached file.

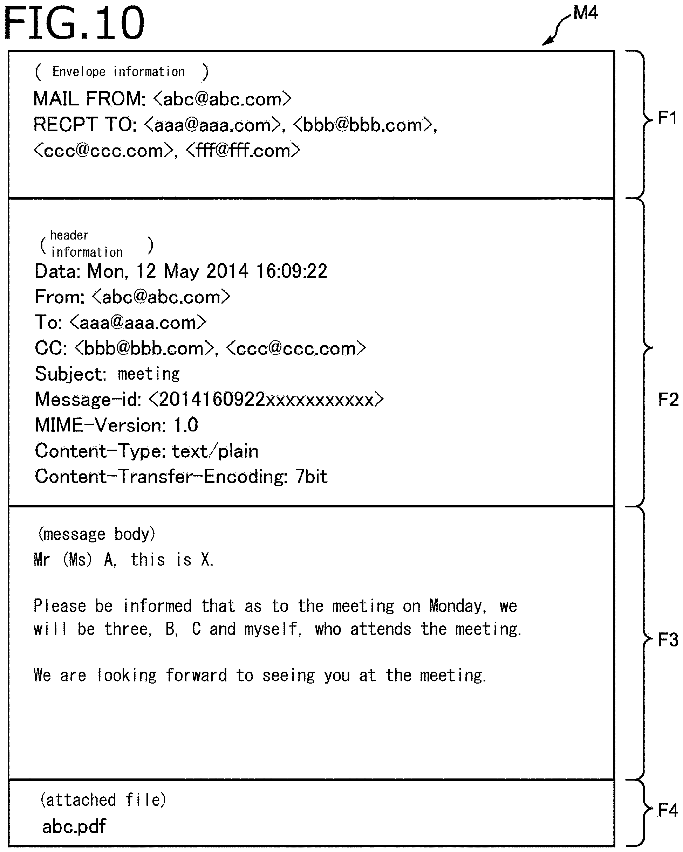

Fig. 10 shows the contents of main data M4 that is sent to the destination of ""fff@fff.com" for which the accepting module 52 does not accept the setting of notification of other BCC addresses. As shown in Fig. 10, the mail data generation module 53 generates the mail data M4 that includes envelope information F1 in which the destination of ""aaa@aaa.com", the destination of ""bbb@bbb.com", the destination of ""ccc@ccc.com" and the destination of ""fff@fff.com" are used as RECPT TO information, mail message body information F3 that includes a common mail message body and attached file information F4 that includes a common attached file.

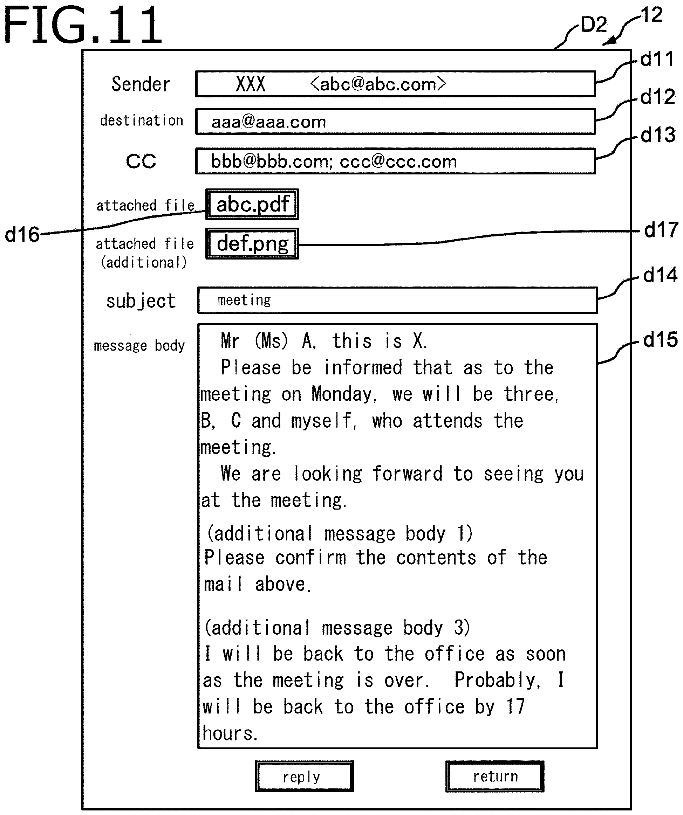

Fig. 11 is a diagram showing an example of the contents of the mail data display screen D2 that is displayed on the display unit 12 of the mail client 1, the mail client 3 or the mail client 4 that receives the mail data M2 shown in Fig. 8. In the example shown in Fig. 11, the display control module 56 instructs the display unit 12 to display the common mail message body, the additional mail message body 1 and the additional mail message body 3 that are included in the mail message body information F3 in the mail message body display field d15 on the mail data display screen D2. Additionally, when the accepting module 52 accepts the selection of an attach a file button d17, the display control module 56 instructs the display unit 12 to display thereon an additional attached file associated with the attach a file button d17.

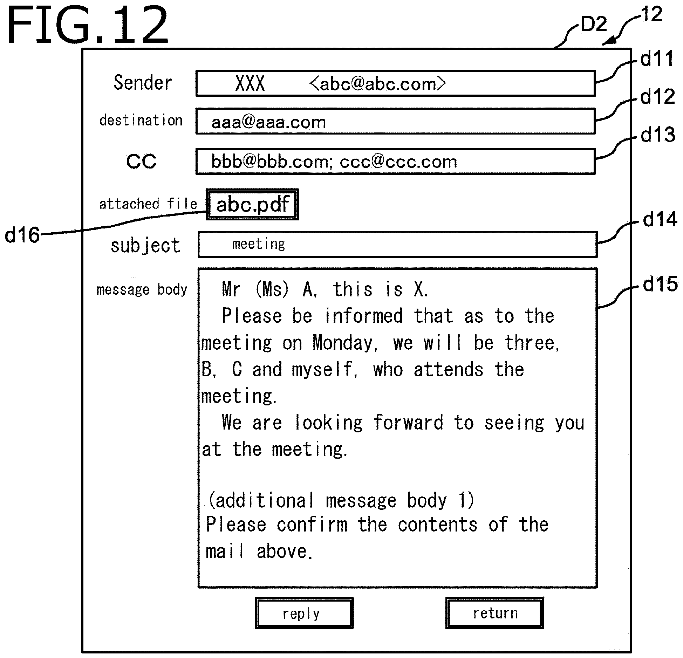

Fig. 12 is a diagram showing an example of the contents of the mail data display screen D2 that is displayed on the display unit 12 of the mail client 1, the mail client 3 or the mail client 4 that receives the mail data M3 shown in Fig. 9. In the example shown in Fig. 12, the display control module 56 instructs the display unit 12 to display the common mail message body and the additional mail message body 1 that are included in the mail message body information F3 in the mail message body display field d15 on the mail data display screen D2.

Thus, as has been described heretofore, according to the mail client 1 of the embodiment of the invention, the accepting module 52 accepts the mail message body and the plurality of BCC destinations and accepts the setting of the group attributes that indicate the groups to which the BCC destinations belong and the additional mail message contents that are added to the mail message body for the individual group attributes. Additionally, the mail data generation module 53 generates the mail data that includes the command to send the mail including the mail message body for the BCC destination for which the accepting module 52 does not accept the setting of group attributes to the mail server 2A and the command to send the mails including the additional mail contents that correspond to the groups to which the BCC addresses for which the accepting module 52 accepts the setting of group attributes belong and the mail message body to the mail server 2A. By adopting this configuration, in sending the mail data having the plurality of BCC destinations as the sending destinations, it is possible to change the contents of the mail message bodies to be added for the individual BCC destinations.

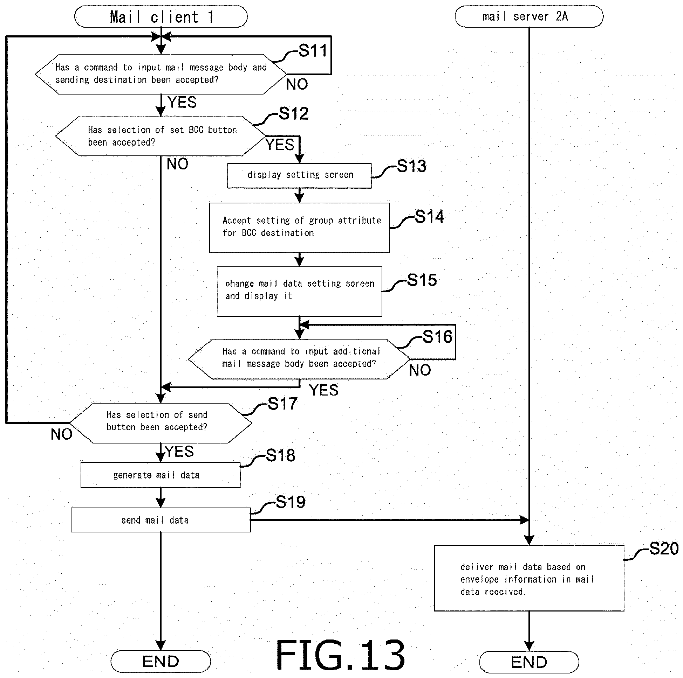

Next, a flow of operations of the mail client 1 and the mail server 2 that are configured as described above will be described. Fig. 13 is a flowchart showing a flow of mail data sending operations by the mail client 1 and the mail server 2A.

The accepting module 52 of the mail client 1 determines whether or not it has accepted a command to input a mail message body and a sending destination (step S11).

If the accepting module 52 has determined that it has accepted the command to input a mail message body and a sending destination (YES in step S11), the accepting module 52 determines whether or not it has accepted the selection of the set BCC button d6 (step S12).

If the accepting module 52 has determined that it has accepted the selection of the set BCC button d6 (YES in step S12), the display control module 56 instructs the display unit 12 to display thereon the setting screen D3 where the setting of group attributes that indicate the groups to which the BCC destinations belong is accepted (step S13).

After the operation in step S13 has been completed, the accepting module 52 accepts the setting of group attributes indicating the groups to which the BCC destinations belong (step S14).

If the accepting module 52 has accepted the setting of group attributes (YES in step S14), the display control module 56 instructs the display unit 12 to display thereon the mail data generation screen in which main message body input fields are provided for the individual group attributes set (step S15).

Thereafter, the accepting module 52 determines whether or not it has accepted an input command to input an additional mail message body (step S16).

When the accepting module 52 accepts the selection of the send button d7 after the operation in step S12 or step S16 has been completed (YES in step S17), the mail data generation module 53 generates mail data based on the input contents or setting that the accepting module accepts in the operation in step S11 or step S16 (step s18).

After the mail data has been generated, the communication control module 54 instructs the communication unit 11 to send the mail data that has been generated by the mail data generation unit 53 to the mail server 2A (step S19).

The mail server 2A receives the mail data sent from the mail client 1 and delivers the mail data to a mail server that is indicated in the envelope information of the mail data received (step S20).

The invention is not limited to the embodiment that has been described heretofore but can be modified variously.

In the embodiment, the mail data generation module 53 of the mail client 1 generates the mail data that includes the envelope information that includes as a sending destination the BCC destination for which the accepting module 52 does not accept the setting of the group attribute and the mail message body and the mail data that includes the envelope information that includes as sending destinations the BCC destinations for which the accepting module 52 accepts the setting of the group attributes, the additional contents corresponding to the groups to which the BCC destinations belong and the mail message data. In contrast with this, in a modified example, a mail data generation module 53 of a mail client 1 does not generate a plurality of mail data but generates one mail datum for the group attribute of each BCC destination, and the one mail datum is sent to a mail server 2A. In the mail server 2A, information included in the one mail datum so received is analyzed and generates a plurality of data for the group attribute of each BCC destination, and the mail data is sent individually to corresponding mail servers.

Specifically speaking, the mail data generation module 53 generates mail data that includes (1) a mail message body that a accepting module 52 accepts, (2) envelope information in which all sending destinations that the accepting module 52 accepts are used as sending addresses, (3) the setting of group attributes that indicate groups to which BCC destinations that the accepting module 52 accepts belong, (4) additional contents set individually for the group attributes that the accepting module 52 has accepted, and (5) a command to instruct the mail server 2A to generate a sending mail that is addressed to a BCC destination for which the accepting module 52 of the mail client 1 does not accept the setting of a group attribute in sending destinations shown in envelope information and which includes a mail message body, to instruct the mail server 2A to generate a sending mail that is addressed to BCC destinations for which the accepting module 52 has accepted the setting of group attributes and which includes additional contents corresponding to the groups to which the BCC destinations belong and a mail message body, and to instruct the mail server 2A to send the sending mails generated thereby.

Then, following the command included in the mail data sent thereto from the mail client 1, the mail server 2A generates a sending mail that is addressed to a BCC destination for which the accepting module 52 of the mail client 1 does not accept the setting of a group attribute and which includes a mail message body (a sending mail generation module). In addition, the mail server 2A generates a sending mail that is addressed to the BCC destinations for which the accepting module 52 has accepted the setting of group attributes and which includes additional contents corresponding to the groups to which BCC destinations belong and a mail message body (a sending mail generation module). Thereafter, the mail server 2A sends the sending mails generated thereby (a transmission module).

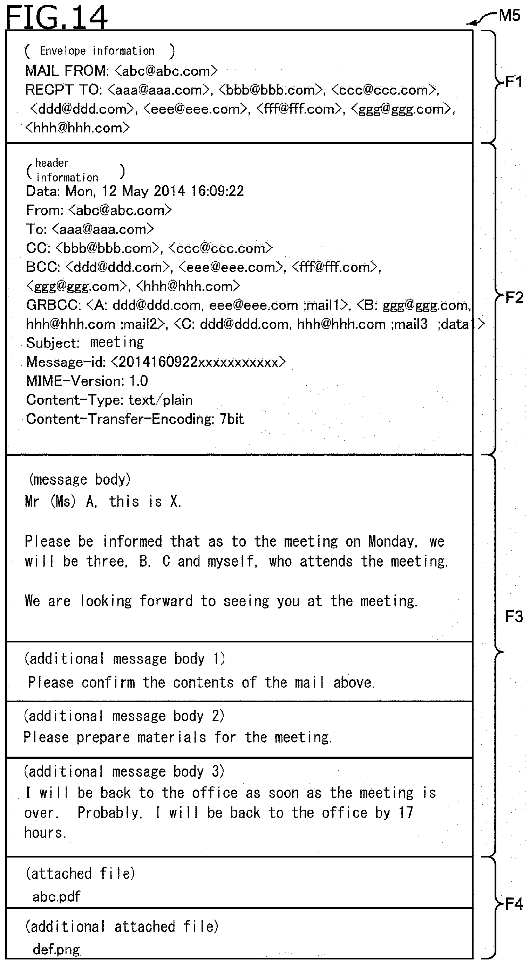

Fig. 14 is a diagram showing an example of mail data M5 that is generated by a mail data generation module 56 of the mail client 1 according to the modified example. Here, the contents of the mail data M5 are shown which is generated in the event that the accepting module 52 accepts the mail message bodies and setting shown in Figs. 6 and 7. The mail data generation module 53 generates envelope information F1 in which all sending destinations that the accepting module 52 accepts are used as RECT TO information. Additionally, the mail data generation module 53 generates header information F2 that includes group attributes indicating groups to which BCC destinations that the accepting module 52 accepts belong and GRBCC information that is information indicating the setting of additional mail message bodies and additional attached files that are sent to the BCC destinations that belongs to the group attributes. In the example shown in Fig. 14, for example, "A: ddd@ddd.com, eee@eee.com; mail 1" indicates that the BCC destinations of "ddd@ddd.com" and "eee@eee.com" belongs a group A and that an additional mail message body 1 is sent to the BCC destinations which belong to the group A. Additionally, "C: ddd@dddd.com, hhh@hhh.com; mail 3; data 1" indicates that the BCC destinations of "ddd@ddd.com" and "hhh@hhh.com" belong a group C and that an additional mail message body 3 and an additional attached file 1 are sent to the BCC destinations that belong to the group C.

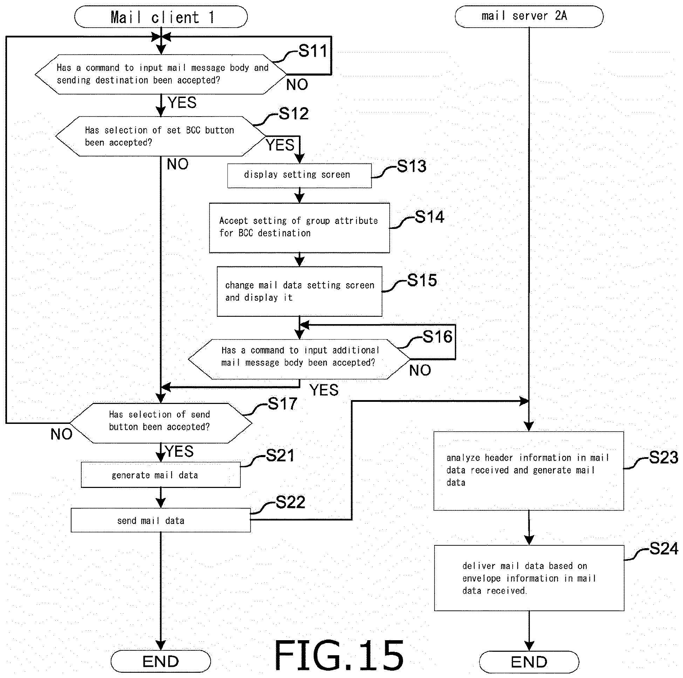

Fig. 15 is a flowchart showing a flow of mail data sending operations by the mail client 1 and the mail server 2A according to the modified example. Like reference numerals will be given to similar operations to those described in the flowchart shown in Fig. 13, and the description thereof will be omitted here.

When the accepting module 52 accepts the selection of the send button d7 (YES in step S15), the mail data generation module 53 generates mail data based on the input contents or the setting that the accepting module accepts in the operation in step S11 or step S16 (step S21). After the mail data has been generated, the communication control module 54 instructs the communication unit 11 to send the mail data generated by the mail data generation module 53 to the mail server 2A (step S22).

The mail server 2A receives the mail data sent from the mail client 1, analyses the header information in the mail data received and generates mail data in which the header information is changed (step S 23). For example, in the case of the mail server 2A receiving the mail data M5 shown in Fig. 14, the mail server 2A generates mail data M2, M3, M4 that are shown in Figs. 8 to 10 based on the GRBCC information in the header information.

After the operation in step S23 has been completed, the mail server 2A sends the data generated thereby to mail servers shown in the envelope information (step S24).

Thus, as has been described heretofore, with the mail client 1 according to the modified example, too, as with the mail cline 1 according to the embodiment, in sending the mail data addressed to the plurality of BCC destinations, the contents of the mail massages that are added individually to the BCC destinations can be changed.

The mail data transmission program (the communication control program) that has been described in the embodiment may be such as to be recorded in a computer readable non-temporary storage medium such as, for example, a hard disk, a CD-ROM, a DVD-ROM and a semiconductor memory. As this occurs, the computer readable non-temporary storage medium on which the mail data transmission program is recoded constitutes the embodiment of the invention.

## Claims

1. A communication device comprising:
an accepting module (52) that accepts a mail message body and a plurality of BCC destinations and which accepts the setting of group attributes indicating groups to which the BCC destinations belong and additional contents that are added to the mail message body individually for the group attributes;
a mail data generation module (53) that generates mail data (M4) that includes the mail message body and which are addressed to a BCC destination for which the accepting module (52) does not accept the setting of a group attribute and mail data (M2,M3) that includes the additional contents corresponding to the groups to which the BCC destinations belong and the mail message main body and which are addressed to the BCC destinations for which the accepting module (52) accepts the setting of group attributes; and
a transmission module (11,54) that sends the mail data (M2,M3,M4) that the mail data generation module (53) generates.

2. The communication device according to Claim 1, wherein
the mail data generation module (53) generates, as the mail data, mail data (M4) that includes envelope information (F1) in which the BCC destination for which the accepting module (52) does not accept the setting of a group attribute is used as a sending destination and the mail message body and mail data (M2,M3) that includes envelope information (F1) in which the BCC destinations for which the accepting module (52) accepts the setting of group attributes as sending destinations, the additional contents corresponding to the groups to which the BCC destinations belong and the mail message body.

3. The communication device according to Claim 1, comprising further:
a display unit (12) and a display control module (56) that controls a display operation by the display unit (12), wherein
the display control module (56) instructs the display unit (12) to display a mail message body input field (d5) where the accepting module (52) accepts the mail message body and an additional contents input field (d21,d22,d23) where the accepting module (52) accepts the additional contents on a single screen that does not have to be switched over.

4. A communication device comprising:
an accepting module (52) that accepts a mail message body and a plurality of BCC destinations and which accepts the setting of group attributes indicating groups to which the BCC destinations belong and additional contents that are added to the mail message body individually for the group attributes;
a mail data generation module (53) that generates mail data (M5) that includes a command to send a sending mail including the mail message body and which are addressed to a BCC destination for which the accepting module (52) does not accept the setting of a group attribute to a mail server and a command to send a sending mail including the additional contents corresponding to the groups to which the BCC destinations belong and the mail message main body and which are addressed to the BCC destinations for which the accepting module (52) accepts the setting of group attributes to the mail server; and
a transmission module (11,54) that sends the mail data (M5) that the mail data generation module (53) generates.

5. A mail server comprising:
a sending mail generation module that generates a sending mail addressed to a BCC destination for which an accepting module (52) of a communication device does not accept the setting of a group attribute and including a mail message body and a sending mail addressed to a BCC destination for which the accepting module (52) accepts the setting of a group attribute and including an additional content corresponding to a group that the BCC destination that the accepting module (52) accepts belongs and the mail message body by following commands included in mail data (M5) sent thereto from the communication device; and
a transmission module (11,54) that sends the sending mails that the sending mail generation module generates.
